# FASCICULE DE BREVET EUROPEEN

(11) **EP 2 664 584 B1**
(45) Date de publication et mention de la délivrance du brevet: **22.04.2020**
(21) Numéro de dépôt: 13167827.8
(22) Date de dépôt: 15.05.2013
(51) Int. Cl.: C02F 1/00, C02F 9/02, C02F 9/14, C02F 9/08, C02F 1/32, C02F 1/44, C02F 3/04, C02F 3/12, C02F 103/00

(54) **Dispositif de filtration des eaux grises domestiques**
Filtervorrichtung für häusliches Grauwasser
Device for filtering grey water from households

(30) Priorité: 16.05.2012 FR 1254499
(43) Date de publication de la demande: 20.11.2013
(73) Titulaire: Aquapure International, 84000 Avignon (FR)
(72) Inventeur: MAZZIOTTA, Gérard, 30390 ARAMON (FR)
(74) Mandataire: Roman, Alexis

(56) Documents cités:
- EP-A1- 1 762 290
- EP-A1- 2 157 056
- WO-A2-99/67173
- WO-A2-2004/024289
- DE-A1- 19 807 890
- FR-A- 524 674
- GB-A- 1 110 559
- US-A- 4 906 381

## Description

### Domaine technique de l'invention.

La présente invention a pour objet un dispositif pour réaliser une filtration des eaux grises domestiques. L'invention concerne également une installation intégrant ledit dispositif et destinée au traitement non collectif des eaux grises domestiques en vue de leur réutilisation ultérieure.

Le domaine technique de l'invention est celui des dispositifs de filtration des eaux résiduaires, et notamment des dispositifs destinés à être mis en œuvre dans un procédé et/ou une installation impliquant au moins un organe de filtration membranaire.

### État de la technique.

Par « eaux grises domestiques » on entend dans le cadre de la présente invention les eaux provenant des usages domestiques tels que les douches, les lavabos ou les baignoires de salles de bain, les éviers de cuisine, les lave-vaisselles et les lave-linges. Elles représentent plus de 80 % du volume total d'eau usée rejetée par un ménage.

La récupération et le traitement des eaux grises en vue de leur réutilisation, notamment pour le rinçage de cuvettes de toilette, le pré-lavage ou lavage des lave-linge, le nettoyage de surfaces et/ou l'arrosage de jardins, le remplissage des piscines, représente un enjeu important pour la réduction de la consommation d'eau potable dont le prix ne cesse d'augmenter, la réduction des effluents et le développement durable.

Les eaux grises sont généralement chargées de résidus alimentaires, de graisses, d'huiles, de produits de nettoyage, de matières fibreuses telles que des cheveux ou des fibres textiles, etc.

Les techniques et les problèmes liés au traitement et recyclage des eaux grises sont bien connus de l'art antérieur. Les techniques conventionnelles associant un ou plusieurs traitement(s) biologique(s) à un organe de micro- ou ultrafiltration membranaire permettent de réutiliser les eaux grises, une seconde fois, après désinfection, et représentent une solution judicieuse sur le plan écologique et économique. La performance de telles techniques dépend, cependant, de l'étape de pré-filtration qui permet de protéger l'organe de filtration membranaire contre l'arrivée des particules grossières (ex. résidus alimentaires, cheveux, fibres textiles ou autres) et des matières en suspension présentes dans les eaux grises et qui sont susceptibles de provoquer le colmatage et le vieillissement prématuré des membranes. Il convient de noter que le colmatage des membranes entraîne généralement une réduction très importante de leur capacité de filtration et, par voie de conséquence, une augmentation des coûts d'exploitation correspondants aux entretiens par lavage très réguliers, voire au remplacement des organes de filtration.

Il est ainsi connu de disposer des tamis, paniers filtrants ou plaques de mousses en amont des zones de filtration membranaire pour bloquer les résidus alimentaires et les pelotes de fibres telles que cheveux ou fibres textiles. Ces pré-filtres présentent toutefois des limites communes et un seuil d'efficacité très faible. En effet, ils ne permettent généralement pas de stopper les débris, matières en suspension et brins isolés de cheveux et de fibres textiles dont la taille est inférieure à 1 mm.

Par ailleurs, les dispositifs renfermant un empilement de couches de média filtrant (ex sable, graviers, pierre ponces) à granulométrie différente sont également bien connus et décrits dans la littérature (voir par exemple le brevet GB 1,110,559 A (GEOFFREY THOMAS JOWITT FOX)). Ces dispositifs peuvent permettre une meilleure filtration en enlevant une grande quantité de particules présentes dans les eaux grises domestiques. De tels dispositifs présentent toutefois certains inconvénients liés notamment au fait qu'ils constituent un tout sans possibilité d'accéder aux différentes couches de média filtrant indépendamment les unes des autres lors des opérations de contrôle et d'entretien. En effet, il a été constaté que les différentes couches de média filtrant ne colmatent pas de la même manière au sein de tels dispositifs de filtration qui doivent souvent être arrêtés et démontés après un certain temps d'utilisation pour pouvoir intervenir sur le média filtrant voire même remplacer quasiment toutes les couches de média filtrant. Chacun de ces arrêts et interventions a un impact financier considérable.

Pour pallier ces inconvénients, on a proposé de réaliser un dispositif de filtration de liquides comportant une cuve cylindrique à couvercle contenant différentes couches de média filtrant de granulométrie décroissante dans le sens d'écoulement descendant du liquide à filtrer (voir le brevet FR524674 (ANGELO M CAPRO)). Ces couches de média filtrant se trouvent dans des paniers à parois perforées qui sont empilés les uns au dessus des autres. Néanmoins, l'inconvénient de ce type de montage est que l'insertion ou l'extraction des paniers en vue de leur entretien ou leur remplacement doit se faire dans le sens vertical, cela a pour conséquence que l'accès aux paniers inférieurs n'est possible que par le démontage total du dispositif. Un autre inconvénient avec un tel dispositif réside dans le fait que le liquide à filtrer n'est pas distribué de façon homogène sur la surface de la couche de média filtrant située le plus haut et peut traverser les différentes couches de média filtrant en prenant des cheminements préférentiels (par exemple le long des parois verticales perforées des paniers) avec comme conséquence une mauvaise répartition du liquide au sein des couches de média filtrant ce qui est tout à faite néfaste à la bonne rétention des particules en suspension.

US 4 906 381 A enseigne un dispositif de filtration pour séparer des solides contenus dans un fiuide, comportant des cartouches (ou modules) qui sont disposées dans une cuve les-unes au dessus des autres. La cuve qui semble étanche est à parois verticales et est pourvue d'une ouverture frontale équipée d'une porte donnant accès a l'intérieur de ladite cuve. Les cartouches comportent une chambre de filtration contenant un média filtrant maintenu bloqué entre deux faces ouvertes opposées par une grille autorisant l'écoulement du fluide à filtrer.

Ainsi, compte tenu de ce qui précède, l'invention a pour but de concevoir un dispositif de filtration des eaux grises qui soit facile d'entretien et dont les coûts de maintien sont réduits.

Un autre but de l'invention est de faciliter l'accès aux différentes couches de média filtrant.

Encore un autre but de l'invention est de proposer un dispositif de filtration des eaux grises domestiques dont les performances sont améliorées par rapport aux dispositifs connus de l'art antérieur.

Encore un autre but de l'invention est de proposer un dispositif de filtration qui permette de prévenir, ou à tout le moins de réduire, le colmatage des membranes des organes de filtration dans une station (ou micro-station) de traitement et de recyclage des eaux grises domestiques provenant d'une population de moins de 10 équivalents-habitant, le caractère modulaire de l'installation permettant d'adapter celle-ci à la demande.

### Divulgation de l'invention.

La solution proposée par l'invention est un dispositif selon la revendication 1 pour réaliser une filtration des eaux grises domestiques, comprenant une cuve étanche à parois verticales, pourvue d'une ouverture frontale équipée d'une porte donnant accès à l'intérieur de ladite cuve et comportant une entrée desdites eaux grises à filtrer aménagée dans sa partie haute, et une sortie desdites eaux grises filtrées aménagée dans sa partie basse, ladite cuve contenant différentes couches superposées de média filtrant (MF₁, MF₂, ...MFn) de granulométrie décroissante dans le sens d'écoulement des eaux grises, chaque couche de média filtrant est disposée dans une cartouche (C₁, C₂, ... Cₙ) montée de façon amovible dans la cuve, lesdites cartouches (C₁, C₂, ...Cₙ) étant superposées les unes au dessus des autres, la circulation des eaux grises se faisant de haut en bas depuis la cartouche située le plus haut vers la cartouche située le plus bas, chaque dite cartouche (C₁, C₂, ... Cₙ) comportant une chambre de filtration à l'intérieur de laquelle est contenue bloquée la couche de média filtrant, ladite chambre de filtration étant délimitée par une ou plusieurs parois latérales verticales ou inclinées et deux faces ouvertes opposées, chacune desdites faces ouvertes opposées étant munie d'une grille autorisant l'écoulement des eaux grises. Ce dispositif est remarquable en ce que :
- chaque dite cartouche (C₁, C₂, ...Cₙ) est montée glissante sur des glissières étanches disposées à l'intérieur de la cuve de manière à pouvoir les retirer individuellement et de manière totalement indépendante, et
- ladite cuve est en outre munie d'une entrée d'air pour l'injection d'air pulsé, laquelle entrée d'air est aménagée dans la partie basse de ladite cuve.

La Demanderesse a montré que l'utilisation de cartouches présentant une chambre de filtration de forme tronconique favorise la circulation des eaux grises selon un mouvement cyclonique dans les cartouches, et donc permet de limiter voire éviter les risques de création, dans les couches de média filtrant, de chemins d'écoulement par lesquels les eaux grises à filtrer s'engageraient préférentiellement sans subir la filtration ou l'épuration souhaitée. Elle a par ailleurs constaté que l'injection d'air (ou gaz oxygéné) pulsé via une entrée d'air aménagée dans la partie basse de la cuve permet d'améliorer la répartition des eaux grises à filtrer au sein des couches de média filtrant, et donc d'optimiser leur filtration ou leur épuration. En effet, en perturbant l'écoulement descendant des eaux grises, l'air pulsé empêche la formation de chemins d'écoulement préférentiels dans les couches de média filtrant.

Outre l'obtention des résultats très intéressants susmentionnés, le dispositif de filtration selon l'invention procure plusieurs avantages : Il permet, d'une part, une filtration étagée des eaux grises en les débarrassant, progressivement, des impuretés solides et, d'autre part, de faciliter le contrôle et l'entretien sélectif des cartouches de média filtrant. En effet, lorsqu'une ou plusieurs cartouches sont usagées, c'est-à-dire lorsque le média filtrant est colmaté et/ou ne remplit plus son rôle de filtration de façon satisfaisante, l'utilisateur retire individuellement et de manière totalement indépendante les cartouches usagées pour les remplacer par de nouvelles cartouches, éventuellement par des cartouches usagées nettoyées et régénérées. Par ailleurs, la régénération des cartouches usagées n'est pas onéreuse.

La demanderesse a également constaté que le dispositif de l'invention limite fortement les risques de colmatage des organes de filtration membranaire situés en aval dans une installation de traitement et de recyclage des eaux grises domestiques et par conséquent limite les coûts d'exploitation d'une telle installation.

Un autre aspect de l'invention concerne une installation de traitement non collectif des eaux grises domestiques en vue de leur réutilisation ultérieure, du type comprenant successivement et dans l'ordre d'écoulement du flux :
- un réservoir de rétention desdites eaux grises brutes,
- un réacteur de traitement biologique recevant les eaux grises dudit réservoir de rétention et assurant une dégradation aérobie de la matière organique contenue dans les eaux grises brutes,
- un compartiment à membrane assurant une microfiltration des eaux traitées dans le réacteur, et
- une chambre d'irradiation par rayonnement UV permettant une désinfection des eaux micro-filtrées provenant du compartiment à membrane. Cette installation de traitement non collectif des eaux grises domestiques est remarquable en ce qu'elle comprend en outre un dispositif de filtration conforme à la présente invention, pour pré-filtrer lesdites eaux grises brutes, ledit dispositif de filtration recevant les eaux grises dudit réservoir de rétention, d'une part, et alimentant ledit réacteur de traitement biologique en eaux pré-filtrées, d'autre part.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente schématiquement une vue de face du dispositif de filtration selon un mode de réalisation de la présente invention, l'écoulement des eaux grises à filtrer se faisant de haut en bas.
- la figure 2 représente, en perspective, une première forme de réalisation d'une cartouche.
- la figure 3 représente, en perspective, une seconde forme de réalisation d'une cartouche.
- la figure 4 représente, en perspective, une troisième forme de réalisation d'une cartouche.
- la figure 5 représente, en perspective, une quatrième forme de réalisation d'une cartouche.
- la figure 6 représente, en perspective, une cinquième forme de réalisation d'une cartouche.
- la figure 7 représente, en perspective, une sixième forme de réalisation d'une cartouche.
- La figure 8 schématise une installation de traitement des eaux grises en vue de leur réutilisation ultérieure, selon un premier mode de réalisation.

### Modes de réalisation de l'invention.

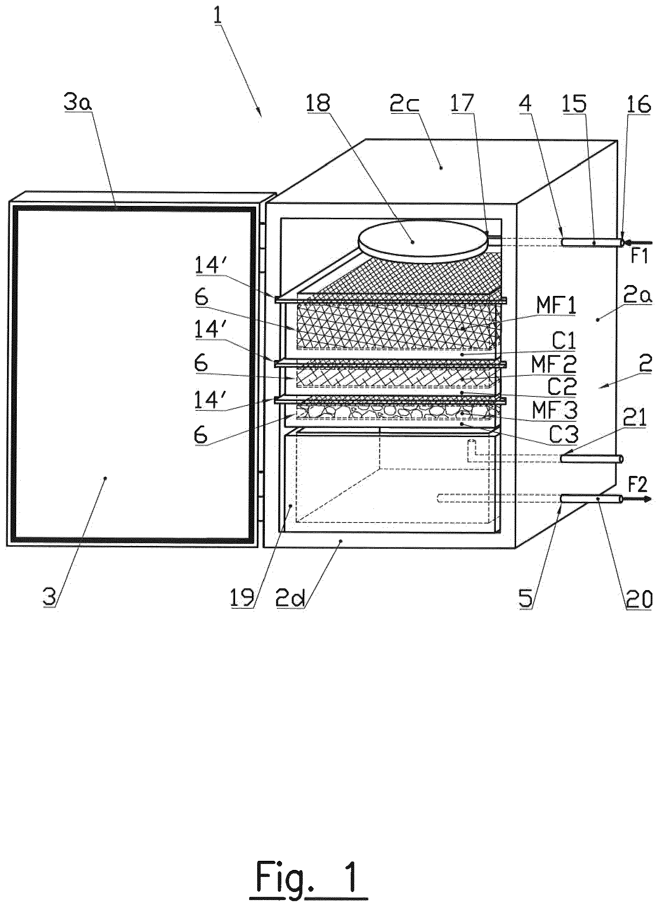

En se référant à la figure 1, le dispositif de filtration des eaux grises objet de l'invention permet de filtrer efficacement les eaux grises domestiques en les soumettant à une filtration étagée qui met en œuvre différentes cartouches (C₁, C₂, ... Cₙ) de média filtrant superposées les unes au dessus des autres, et dont la granulométrie décroit dans le sens d'écoulement des eaux grises à filtrer, c'est-à-dire du haut vers le bas. Conformément à l'invention, ces cartouches (C₁, C₂, ... Cₙ) sont montées amovibles dans une cuve (1) indépendamment les unes des autres.

Cette disposition permet, d'une part, de débarrasser les eaux grises domestiques des résidus alimentaires, des pelotes ou brins isolés de cheveux ou de fibres textiles ainsi que des matières en suspension supérieures à 500 microns, de préférence supérieures à 300 microns, préférentiellement comprise entre 300 microns et 500 microns et d'autre part de rendre aisé l'entretien du dispositif de filtration en cas de d'encrassement ou de colmatage d'au moins une cartouche (C1, C2, ... Cn) de média filtrant.

Plus généralement, le dispositif objet de l'invention est destiné à filtrer ou pré-filtrer les eaux grises domestiques afin de prévenir ou à tout le moins réduire le colmatage des organes de filtration membranaire situés en aval dans une installation (ou micro-station) de traitement et de recyclage des eaux grises domestiques provenant d'une population de moins de 10 équivalent habitants (par exemple provenant d'une résidence isolée non reliée à un réseau de traitement collectif), le traitement des eaux noires devant par ailleurs être assuré soit par fosse sceptique classique soit par rejet dans un collecteur.

Il est bien entendu possible de mettre en œuvre le dispositif selon l'invention pour filtrer d'autres types d'effluents usés, par exemple les eaux pluviales, les eaux usées produites dans les blanchisseries ou autres.

En pratique, ce dispositif de filtration est intégré dans une installation de traitement non collectif des eaux grises domestiques en vue de leur réutilisation, notamment pour le rinçage de cuvettes de toilette, le pré-lavage ou le lavage dans le lave-linge, le lavage de surfaces, l'arrosage ou autres.

Ainsi que cela est illustré à la figure 1, ce dispositif de filtration des eaux grises domestiques comprend une cuve (1) incluant les cartouches (C₁, C₂, ... Cₙ) de média filtrant superposées les unes au dessus des autres. Ces cartouches (C₁, C₂, ... Cₙ) sont montées de façon amovible dans la cuve (1), le sens d'écoulement des eaux grises à filtrer se faisant de haut en bas. En pratique, cette cuve (1) est délimitée par une paroi latérale verticale (2a), une paroi de fond (2d) et une paroi de voûte (2c). Elle comporte, en partie haute, une entrée (4) des eaux grises à filtrer, et en partie basse une sortie (5) des eaux grises filtrées.

La cuve (1) est pourvue d'une ouverture frontale équipée d'une porte (3) donnant accès à l'intérieur de ladite cuve (1). Un joint (3a) permet de réaliser l'étanchéité entre la cuve (1) et la porte (3) lorsque cette dernière est fermée. Pour faciliter l'ouverture et la fermeture de la porte (3), cette dernière peut être munie d'une poignée disposée sur sa face externe.

La cuve (1) peut être cylindrique ou parallélépipédique, à fond plat ou conique. Son volume peut varier de 0,5 à 1.5 m³ en fonction du volume d'eaux grises à filtrer (ou pré-filtrer). Elle peut être réalisée en acier inoxydable, en plastique ou en toute autre matière rigide et résistante à la corrosion convenant à l'homme du métier.

Les cartouches (C₁, C₂,... Cₙ) équipant la cuve (1) contiennent respectivement un média filtrant (MF₁, MF₂, ... MFₙ) de granulométrie différente. Elles sont avantageusement configurées de manière à être traversées de part en part par les eaux grises à filtrer. On notera que la cartouche (C₁) dont la granulométrie est la plus élevée est celle située le plus haut dans la cuve (1).

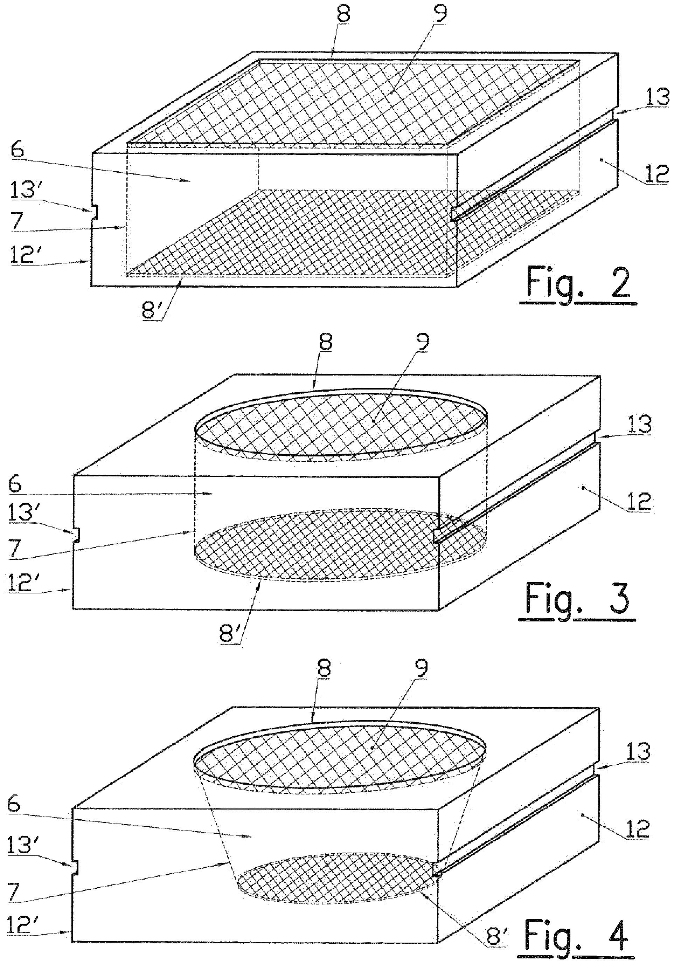

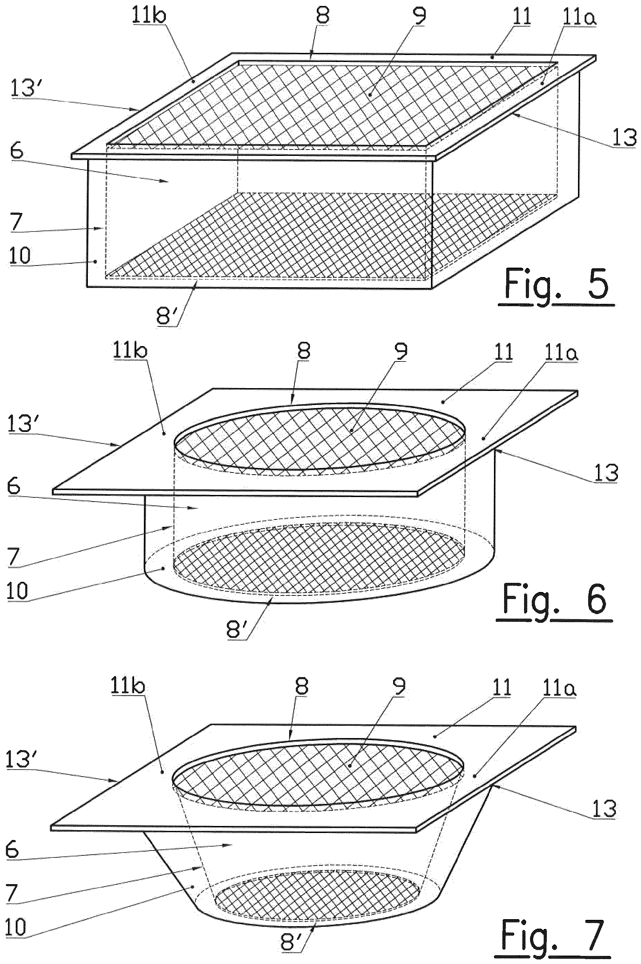

Les cartouches (C₁, C₂,... Cₙ) ont une forme générale sensiblement parallélépipédique (figures 2, 3, 4). Il est également possible de concevoir les cartouches (C₁, C₂,... Cₙ) sous la forme d'un corps (10) sensiblement parallélépipédique (figure 5), cylindrique (figure 6), ou tronconique (figure 7) ayant une extrémité supérieure ouverte et entourée par un rebord (11) de forme sensiblement carrée ou rectangulaire (figures 5, 6, 7). Généralement, les cartouches (C₁, C₂,... Cₙ) sont réalisées en un matériau résistant à la corrosion, par exemple en acier inoxydable ou en plastique. Le volume de chaque cartouche (C₁, C₂,... Cₙ) peut varier de 0,03 m³ à 0,1 m³ en fonction du média filtrant mis en œuvre, des caractéristiques de filtrage souhaité et du volume d'eaux grises à filtrer (ou pré-filtrer).

En pratique, chaque cartouche (C₁, C₂,... Cₙ) est équipée de glissières (13, 13') disposées respectivement sur les faces extérieures de ses parois latérales (12, 12') (figures 2, 3, 4) ou sur les extrémités opposées (11a, 11b) du rebord (11) (figures 5, 6, 7). Ces glissières (13, 13') peuvent se présenter sous forme de nervures (figures 2, 3, 4) ou de rebords en saillie (figures 5, 6, 7). Les glissières (13, 13') sont adaptées pour coopérer avec des logements correspondants (14, 14') prévus dans la cuve (1) (voir figure 1, seuls les logements (14') sont référencés). Ainsi, lorsque l'utilisateur souhaite effectuer les opérations de contrôle et d'entretien, il peut extraire individuellement chaque cartouche (C₁, C₂,... Cₙ) hors de la cuve (1) en la tirant simplement vers l'avant (c'est à dire vers l'utilisateur). L'étanchéité entre les glissières (13, 13') et les logements (14, 14') correspondants est réalisée de manière à ce que le seul circuit possible des eaux grises, de la partie haute de la cuve (1) à la partie basse de la cuve (1), passe à travers le média filtrant (MF₁, MF₂, ... MFₙ) contenu, respectivement, dans les cartouches (C₁, C₂,... Cₙ).

Les cartouches (C₁, C₂,... Cₙ) peuvent être équipées d'un moyen de préhension tel qu'une poignée (non représenté) disposée sur leur face avant, pour permettre à l'utilisateur de les manier en translation lors d'un contrôle du niveau d'encrassement ou d'un changement.

Chaque cartouche (C₁, C₂,... Cₙ) comporte une chambre de filtration (6) à l'intérieur de laquelle est contenue bloquée la couche de média filtrant (MF₁, MF₂, ... MFₙ).

Cette chambre de filtration (6) est délimitée par une ou plusieurs parois latérales verticales (7) (ou parois latérales inclinées dans le cas d'une chambre de filtration (6) de forme tronconique) et deux faces ouvertes opposées (8, 8') (voir figures 2 à 7). De manière avantageuse, chacune des faces ouvertes opposées (8, 8') est munie d'une grille (9) configurée pour retenir le média filtrant tout en autorisant l'écoulement des eaux grises à filtrer. Cette grille (9) est relativement rigide et résistante à la corrosion (par exemple en acier inoxydable ou en plastique), et est préférentiellement amovible pour la mise en place du média filtrant (MF₁, MF₂, ... MFₙ) ou son extraction.

Chaque chambre de filtration (6) peut être parallélépipédique (figures 2, 5), cylindrique (figures 3, 6), ou tronconique (figures 4, 7). On préfère qu'au moins une chambre de filtration (6) ait une forme cylindrique ou tronconique pour permettre un écoulement cyclonique des eaux grises à filtrer dans au moins une cartouche. Cet écoulement cyclonique favorise la filtration.

Les dimensions des chambres de filtration (6) et le nombre des cartouches (C₁, C₂,... Cₙ) seront choisis en fonction des caractéristiques de filtrage souhaitées et de la nature du média filtrant utilisé. Le volume des chambres de filtration (6) peut, par exemple, être compris entre de 0,05 m³ à 0,08 m³.

A titre d'exemple non limitatif, la cuve (1) renferme au moins trois cartouches superposées : respectivement, dans le sens d'écoulement des eaux grises à filtrer, une première cartouche (C₁) présentant une granulométrie grossière comprise entre 25 mm et 40 mm, une seconde cartouche (C₂) présentant une granulométrie moyenne comprise entre 10 mm et 25 mm et une troisième cartouche (C₃) présentant une granulométrie fine comprise entre 0,5 mm et 10 mm.

Avantageusement, le média filtrant (MF₁, MF₂, ... MFₙ) est constitué par des grains de quartz, de pouzzolane, de pierre ponce, d'anthracite, de sable ou de leurs mélanges. Les meilleurs résultats de filtration ou d'épuration ont été obtenus avec les grains de pouzzolane. Ces derniers se caractérisent par une surface de filtration par cm³ très élevée et permettent l'absorption rapide d'une quantité de liquide importante avec des risques de colmatage très réduit. Par ailleurs, le prix de revient de chaque cartouche contenant des grains de pouzzolane permet un entretien qui rend le traitement des eaux grises domestiques en vue de leur réutilisation économiquement viable.

Dans l'exemple de réalisation illustré à la figure 1, l'entrée des eaux grises domestiques à filtrer est représentée par la flèche F1 et la sortie des eaux grises filtrées est représentée par la flèche F2. Dans cette exemple, l'entrée (4) est, avantageusement, équipée d'un conduit (15) débouchant dans la partie haute de la cuve (1), et ayant une extrémité amont (16) susceptible d'être reliée à un réservoir de rétention des eaux grises domestiques brutes et une extrémité aval (17) équipée de buses (18) configurées pour répartir de manière homogène les eaux grises sur la surface supérieure de la cartouche (C₁) la plus haute. Ces buses (18) peuvent être montées sur des rotules de manière à pouvoir régler leur orientation.

La cuve (1) intègre en outre, en partie basse, un bac (19) de collecte des eaux grises filtrées. Ce bac (19) est en communication avec une conduite (20) équipant la sortie (5) et reliée à un système de pompage pour évacuer les eaux grises filtrées.

La cuve (1) peut en outre être équipée d'une grille ou d'un panier filtrant disposée dans le bac (18) et configurée pour effectuer une filtration supplémentaire des eaux grises en retenant les particules en suspension comprises entre 300 microns et 500 microns. De préférence, la grille ou le panier filtrant est disposé de manière amovible dans le bac (18).

Conformément à l'invention, l'air est injecté dans la partie basse de la cuve (1) via l'entrée (21) d'une part pour accentuer l'effet cyclonique dans les cartouches (C₁, C₂, ...Cₙ), et ainsi améliorer la répartition des eaux grises à filtrer au sein des médias filtrant (MF₁, MF₂, ... MFₙ) et d'autre part pour favoriser l'oxygénation des couches de média filtrant. En pratique, on injecte un flux d'air chaud de 40°C à 150°C selon une direction tangentielle à l'écoulement des eaux grises à filtrer.
L'injection d'air, de préférence d'air réchauffé, est adaptée au volume des couches de média filtrant (MF₁, MF₂, ... MFₙ). Elle favorise par ailleurs avantageusement le développement de la masse bactérienne au sein des médias filtrant constitués de préférence de grains de pouzzolane, et par voie de conséquence la dégradation aérobie de la matière organique apportée par les eaux grises à filtrer ou épurer. La masse bactérienne est naturellement contenue dans les eaux grises à filtrer.

On peut éventuellement prévoir, une boucle de re-circulation des eaux grises dans la cuve (1) pour augmenter, si besoin, le temps de contact des eaux grises avec le média filtrant (MF₁, MF₂, ... MFₙ) contenu dans les cartouches (C₁, C₂,... Cₙ).

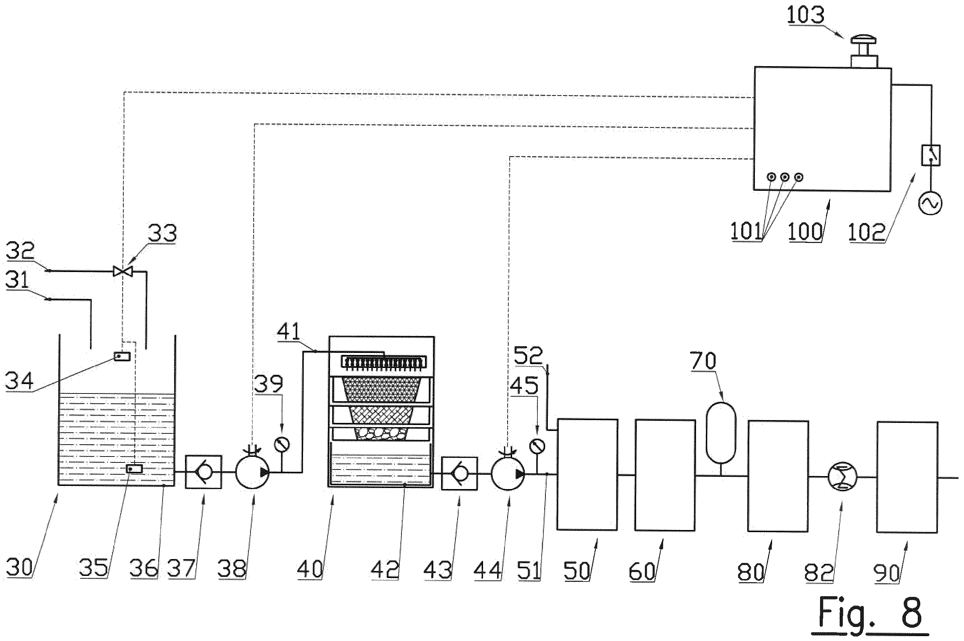

La figure 8 schématise, selon un mode de réalisation préféré, l'organisation d'une installation conforme à l'invention. Cette installation comprend un réservoir de rétention (30) qui reçoit les eaux grises domestiques brutes au moyen d'une canalisation (31) et de l'eau de ville provenant du réseau de distribution au moyen d'une canalisation (32). Le réservoir de rétention (30), par exemple d'une contenance de 500 à 700 litres pour quatre équivalent habitants alimente le dispositif de filtration (40) conforme à l'invention au moyen d'une canalisation (41). Le réservoir de rétention (30) joue également un rôle de décanteur, notamment pour les produits lourds qui sont ainsi éliminés séparément. Il est à noter que le réservoir de rétention (30) peut être adapté pour recevoir également des eaux pluviales. Un apport en eau de ville peut être effectué en ouvrant une électrovanne (33) placée sur la canalisation (32). Cet appoint peut être rendu automatique grâce à deux sondes (34, 35) détectant un niveau minimum et maximum de liquide dans le réservoir (30) et qui déclenchent respectivement l'ouverture et la fermeture de l'électrovanne (33). Les sondes (34, 35) peuvent être par exemple de simples flotteurs commandant des courants électriques.

La canalisation (41) débouche dans le fond (36) du réservoir de rétention (30). Elle comporte successivement en partant du réservoir, un clapet anti-retour (37) et des moyens de pompage (38). Les moyens de pompage comprennent une pompe, et le cas échéant un manomètre (39) ainsi qu'un contacteur manométrique permettant de le relier électriquement à un boîtier de commande (100).

En aval des moyens de pompage (38), est monté le dispositif de filtration (40) conforme à la présente invention pour pré-filtrer les eaux grises brutes provenant du réservoir de rétention (30).

A la suite de ce dispositif de filtration (40) est placé un réacteur (50) de traitement biologique dont la fonction est d'assurer une dégradation aérobie de la matière organique contenue dans les eaux grises pré-filtrées. Le réacteur (50) est alimenté en eaux pré-filtrées par le dispositif de filtration (40) au moyen d'une canalisation (51). Il peut également recevoir de l'eau de ville provenant du réseau de distribution, au moyen d'une canalisation (52).

La canalisation (51) débouche dans la partie basse (42) du fond (36) du dispositif de filtration (40). Elle comporte successivement en partant du réservoir, un clapet anti-retour (43) et des moyens de pompage (44). Les moyens de pompage (44) comprennent une pompe, et le cas échéant un manomètre (45) ainsi qu'un contacteur manométrique permettant de le relier électriquement à un boîtier de commande (100).

A la sortie du réacteur (50), les eaux ayant subi un traitement biologique, sont soumises à une micro-filtration dans un compartiment à membranes (60), puis à une désinfection par rayonnement ultra-violet (UV) dans une chambre d'irradiation (80) dotée d'au moins une lampe UV (par exemple lampe UV de 55 W) apte à détruire les microbes, virus, bactéries et champignons.

Le compartiment à membranes (60) est composé d'au moins deux membranes (par exemple de types organiques ou minérales) permettant d'éliminer les particules ayant de 0,5 micron à 50 microns, de préférence de 1 micron à 10 microns. Une réserve d'eau micro-filtrée (70) est prévue sur une canalisation (81) reliant le compartiment à membranes (60) à la chambre d'irradiation (80). Cette réserve d'eau micro-filtrée (70) est nécessaire aux rétro-lavages des membranes du compartiment (60).

Un débitmètre totalisateur (82) est prévu à la sortie de la chambre d'irradiation (80) pour mesurer la quantité d'eau traitée par l'installation selon l'invention.

Afin de piloter et de contrôler le fonctionnement de l'installation selon l'invention, le boîtier de commande (100) centralise les informations provenant des manomètres (39) et (45) ainsi que de manomètres non représentés placés par exemple en amont et en aval du compartiment à membrane (60).

Le boîtier de commande (100) comporte des voyants (101) signalant des défauts et notamment le dysfonctionnement des moyens de pompage (38) et et/ou (44) ou une perte de charge sur les canalisations de l'installation pouvant résulter par exemple d'une fuite ou du colmatage des membranes équipant le compartiment (60). La vanne (33) et les sondes (34) et (35) sont également reliées au boîtier de commande (100). Un interrupteur général (102), un interrupteur (non représenté) des moyens de pompage et un dispositif d'arrêt d'urgence (103) assurent la sécurité du fonctionnement.

Les eaux grises domestiques ainsi pré-filtrées, traitées biologiquement, micro-filtrées et désinfectées sont stockées dans un réservoir (90) et peuvent donc être utilisées pour le rinçage de cuvettes de toilette, le pré-lavage ou le lavage dans le lave-linge, le lavage de surfaces, l'arrosage ou autres.

L'installation selon l'invention est particulièrement adaptée aux habitations individuelles dans lesquelles elle peut s'installer dans une cave de hauteur limitée. Sa conception modulaire permet de la disposer de manière horizontale ou verticale afin de s'adapter à la hauteur sous plafond. Elle peut également être adaptée aux équipements collectifs type hôtellerie (par exemple de moins de 10 équivalent-habitants) dans lesquels les eaux de douche et salles de bains peuvent être en quantité suffisante pour alimenter une laverie, les toilettes et les sytèmes d'arrosage particulièrement consommateurs d'eau, notamment dans les pays chauds et une piscine.

A titre d'exemple, pour quatre équivalent-habitants, l'installation selon l'invention permet de traiter environ 700 l/jour en vue de fournir quotidiennement, une eau recyclée de bonne qualité, conforme à la norme CEE concernant les eaux de baignade, quelles que soient les conditions climatiques.

La durée typique de fonctionnement de l'installation est d'au moins 5 jours.

De nombreuses améliorations et alternatives peuvent être apportées à cette installation dans le cadre des revendications. Notamment, le dispositif de filtration conforme à l'invention peut aussi être disposé entre le réacteur (50) et le compartiment à membranes (60) pour filtrer les eaux traités en sortie dudit réacteur (50).

## Revendications

1. Dispositif pour réaliser une filtration des eaux grises domestiques, comprenant une cuve (1) étanche à parois verticales (2), pourvue d'une ouverture frontale équipée d'une porte (3) donnant accès à l'intérieur de ladite cuve (1) et comportant une entrée (4) desdites eaux grises à filtrer aménagée dans sa partie haute, et une sortie (5) desdites eaux grises filtrées aménagée dans sa partie basse, ladite cuve (1) contenant différentes couches superposées de média filtrant (MF₁, MF₂, ...MFₙ) de granulométrie décroissante dans le sens d'écoulement des eaux grises, chaque couche de média filtrant est disposée dans une cartouche (C₁, C₂, ... Cₙ) montée de façon amovible dans la cuve (1), lesdites cartouches (C₁, C₂, ... Cₙ) étant superposées les unes au dessus des autres, la circulation des eaux grises se faisant de haut en bas depuis la cartouche située le plus haut vers la cartouche située le plus bas,
chaque dite cartouche (C₁, C₂, ...Cₙ) comportant une chambre de filtration (6) à l'intérieur de laquelle est contenue bloquée la couche de média filtrant, ladite chambre de filtration (6) étant délimitée par une ou plusieurs parois latérales verticales ou inclinées (7) et deux faces ouvertes opposées (8, 8'), chacune desdites faces ouvertes opposées (8, 8') étant munie d'une grille (9) autorisant l'écoulement des eaux grises,
ledit dispositif étant **caractérisé en ce que ,** chaque dite cartouche (C₁, C₂, ...Cₙ) est montée glissante sur des glissières étanches disposées à l'intérieur de la cuve (1) de manière à pouvoir les retirer individuellement et de manière totalement indépendante, et **en ce que** la cuve (1) est en outre munie d'une entrée d'air (21) pour l'injection d'air pulsé, laquelle entrée d'air (21) est aménagée dans la partie basse de ladite cuve(1).

2. Dispositif selon la revendication 1, **caractérisé en ce que** la cuve (1) renferme trois cartouches amovibles et superposées, respectivement, dans le sens d'écoulement des eaux grises à filtrer, une première cartouche (C₁) présentant une granulométrie grossière comprise entre 25 mm et 40 mm, une seconde cartouche (C₂) présentant une granulométrie moyenne comprise entre 10 mm et 25 mm et une troisième cartouche (C₃) présentant une granulométrie fine comprise entre 0,5 mm et 10 mm.

3. Dispositif selon l'une des revendications précédentes, **caractérisé en ce que** le média filtrant est constitué par des grains de quartz, de pouzzolane, de pierre ponce, d'anthracite, de sable ou de leur mélanges.

4. Dispositif selon l'une des revendications précédentes, **caractérisé en ce que** l'entrée (4) est équipée d'un conduit (15) débouchant dans la partie haute de la cuve (1), et ayant une extrémité amont (16) susceptible d'être reliée à un réservoir de rétention des eaux grises à filtrer et une extrémité aval (17) équipée de buses (18) configurées pour répartir de manière homogène les eaux grises sur la surface supérieure de la cartouche (C₁) la plus haute.

5. Dispositif selon l'une des revendications précédentes, **caractérisé en ce que** la cuve (1) intègre en outre, en partie basse, un bac (19) de collecte des eaux grises filtrées, ledit bac (19) étant en communication avec une conduite (20) équipant la sortie (5) et reliée à un système de pompage pour évacuer les eaux grises filtrées.

6. Dispositif selon l'une des revendications précédentes, **caractérisé en ce que** la cuve (1) est en outre équipée d'une grille disposée dans le bac (19) et configurée de manière à retenir les particules en suspension comprises entre 300 microns et 500 microns.

7. Installation de traitement non collectif des eaux grises domestiques en vue de leur réutilisation ultérieure, du type comprenant successivement et dans l'ordre d'écoulement du flux :
- un réservoir de rétention (30) desdites eaux grises,
- un réacteur (50) de traitement biologique recevant lesdites eaux grises dudit réservoir de rétention (30) et assurant une dégradation aérobie de la matière organique contenue dans lesdites eaux grises,
- un compartiment à membrane (60) assurant une microfiltration des eaux traitées dans ledit réacteur (50), et
- une chambre (80) d'irradiation par rayonnement UV permettant une désinfection des eaux micro-filtrées provenant du compartiment à membrane (60),
ladite installation étant **caractérisée en ce qu'**elle comprend en outre un dispositif de filtration (40) conforme à l'une des revendications 1 à 6, pour pré-filtrer lesdites eaux grises, ledit dispositif de filtration (40) recevant lesdites eaux grises dudit réservoir de rétention (30), d'une part, et alimentant ledit réacteur de traitement biologique (50) en eaux pré-filtrées, d'autre part.

## Patentansprüche

1. Vorrichtung zur Durchführung einer Filterung von häuslichem Grauwasser, welche einen dichten Behälter (1) mit vertikalen Wänden (2) umfasst, der mit einer vorderen Öffnung versehen ist, die mit einer Tür (3) ausgestattet ist, die einen Zugang zum Inneren des Behälters (1) ermöglicht, und der einen Einlass (4) für das zu filternde Grauwasser, der in seinem oberen Teil angeordnet ist, und einen Auslass (5) für das gefilterte Grauwasser, der in seinem unteren Teil angeordnet ist, aufweist, wobei der Behälter (1) verschiedene übereinander angeordnete Schichten von Filtermedien (MF₁, MF₂, ..., MFₙ) mit in der Fließrichtung des Grauwassers abnehmender Korngröße enthält, wobei jede Schicht eines Filtermediums in einem Einsatz (C₁, C₂, ..., Cₙ) angeordnet ist, der herausnehmbar in dem Behälter (1) angebracht ist, wobei die Einsätze (C₁, C₂, ..., Cₙ) übereinander angeordnet sind, wobei die Strömung des Grauwassers von oben nach unten vom am höchsten befindlichen Einsatz in Richtung des am niedrigsten befindlichen Einsatzes erfolgt,
wobei jeder Einsatz (C₁, C₂, ..., Cₙ) eine Filterkammer (6) aufweist, in deren Innerem die Filtermediumschicht festgehalten wird, wobei die Filterkammer (6) von einer oder mehreren vertikalen oder geneigten seitlichen Wänden (7) und zwei einander gegenüberliegenden offenen Seiten (8, 8') begrenzt wird, wobei jede dieser einander gegenüberliegenden offenen Seiten (8, 8') mit einem Gitter (9) versehen ist, welches das Durchfließen des Grauwassers ermöglicht,
wobei die Vorrichtung **dadurch gekennzeichnet ist, dass** jeder Einsatz (C₁, C₂, ..., Cₙ) auf im Inneren des Behälters (1) angeordneten dichten Gleitschienen gleitend gelagert ist, so dass sie einzeln und völlig unabhängig voneinander herausgezogen werden können, und dadurch, dass der Behälter (1) außerdem mit einem Lufteinlass (21) zum Einblasen von Zuluft versehen ist, wobei dieser Lufteinlass (21) im unteren Teil des Behälters (1) angeordnet ist.

2. Vorrichtung nach Anspruch 1, **dadurch gekennzeichnet, dass** der Behälter (1) drei herausnehmbare und jeweils in der Fließrichtung des Grauwassers übereinander angeordnete Einsätze umschließt, wobei ein erster Einsatz (C₁) eine grobe Körnung zwischen 25 mm und 40 mm aufweist, ein zweiter Einsatz (C₂) eine mittlere Körnung zwischen 10 mm und 25 mm aufweist und ein dritter Einsatz (C₃) eine feine Körnung zwischen 0,5 mm und 10 mm aufweist.

3. Vorrichtung nach einem der vorhergehenden Ansprüche, **dadurch gekennzeichnet, dass** das Filtermedium aus Quarz-, Puzzolan-, Bimsstein-, Anthrazit- oder Sandkörnern oder deren Mischungen besteht.

4. Vorrichtung nach einem der vorhergehenden Ansprüche, **dadurch gekennzeichnet, dass** der Einlass (4) mit einer Leitung (15) ausgestattet ist, die in den oberen Teil des Behälters (1) mündet und ein stromaufwärtiges Ende (16) aufweist, das mit einem Sammelbehälter für das zu filternde Grauwasser verbindbar ist, und ein stromabwärtiges Ende (17), das mit Düsen (18) ausgestattet ist, die dafür ausgebildet sind, das Grauwasser homogen auf der Oberseite des obersten Einsatzes (C₁) zu verteilen.

5. Vorrichtung nach einem der vorhergehenden Ansprüche, **dadurch gekennzeichnet, dass** in den Behälter (1) außerdem im unteren Teil eine Auffangwanne (19) für das gefilterte Grauwasser integriert ist, wobei die Wanne (19) außerdem mit einer Rohrleitung (20) in Verbindung steht, mit welcher der Auslass (5) ausgestattet ist und welche mit einem Pumpsystem verbunden ist, um das gefilterte Grauwasser abzuleiten.

6. Vorrichtung nach einem der vorhergehenden Ansprüche, **dadurch gekennzeichnet, dass** der Behälter (1) außerdem mit einem Gitter ausgestattet ist, das in der Wanne (19) angeordnet ist und so gestaltet ist, dass es die suspendierten Partikel zwischen 300 Mikrometern und 500 Mikrometern zurückhält.

7. Anlage zur nichtkollektiven Aufbereitung von häuslichem Grauwasser im Hinblick auf seine spätere erneute Verwendung, des Typs, welcher nacheinander und in der Reihenfolge der Fließrichtung des Stroms umfasst:
- einen Sammelbehälter (30) für das Grauwasser,
- einen Reaktor (50) zur biologischen Aufbereitung, der das Grauwasser aus dem Sammelbehälter (30) aufnimmt und einen aeroben Abbau des in dem Grauwasser enthaltenen organischen Materials sicherstellt,
- eine Membrankammer (60), die eine Mikrofiltration des in dem Reaktor (50) aufbereiteten Wassers sicherstellt, und
- eine UV-Bestrahlungskammer (80), die eine Desinfektion des aus der Membrankammer (60) kommenden mikrogefilterten Wassers ermöglicht, wobei die Anlage **dadurch gekennzeichnet ist, dass** sie außerdem eine Vorrichtung zur Filterung (40) gemäß einem der Ansprüche 1 bis 6 zum Vorfiltern des Grauwassers umfasst, wobei die Vorrichtung zur Filterung (40) einerseits das Grauwasser aus dem Sammelbehälter (30) aufnimmt und andererseits dem Reaktor zur biologischen Aufbereitung (50) vorgefiltertes Wasser zuführt.

## Claims

1. Device for filtering grey water from households, comprising a sealed vessel (1) with vertical walls (2), provided with a front opening equipped with a door (3) giving access to the interior of said vessel (1) and comprising an inlet (4) for said grey water to be filtered provided in the top part thereof and an outlet (5) for said grey water that has been filtered, provided in the bottom part thereof, said vessel (1) containing different superposed layers of filter media (MF₁, MF₂, ... MFₙ) that have a particle size that decreases in the direction of flow of the grey water, each layer of filter media is arranged in a cartridge (C₁, C₂, ... Cₙ) mounted removably in the vessel (1), said cartridges (C₁, C₂, ... Cₙ) being superposed on one another, the circulation of the grey water taking place from top to bottom from the uppermost cartridge to the lowermost cartridge,
each said cartridge (C₁, C₂, ... Cₙ) comprising a filtration chamber (6) inside which is contained, immobilized, the layer of filter media, said filtration chamber (6) being delimited by one or more vertical or inclined lateral walls (7) and two opposite open faces (8, 8'), each of said opposite open faces (8, 8') being provided with a grille (9) allowing the flow of the grey water, said device being **characterized in that** each said cartridge (C₁, C₂, ... Cₙ) is mounted slidably on sealed slides arranged inside the vessel (1) such that it is possible to remove them individually and totally independently, and **in that** the vessel (1) is further provided with an air inlet (21) for the injection of pulsed air, which air inlet (21) is provided in the bottom part of said vessel (1).

2. Device according to Claim 1, **characterized in that** the vessel (1) encloses three removable cartridges superposed, respectively, in the direction of flow of the grey water to be filtered, a first cartridge (C₁) having a coarse particle size of between 25 mm and 40 mm, a second cartridge (C₂) having a medium particle size of between 10 mm and 25 mm and a third cartridge (C₃) having a fine particle size of between 0.5 mm and 10 mm.

3. Device according to one of the preceding claims, **characterized in that** the filter media is constituted by grains of quartz, pozzolan, pumice, anthracite, sand, or mixtures thereof.

4. Device according to one of the preceding claims, **characterized in that** the inlet (4) is equipped with a conduit (15) opening out in the top part of the vessel (1) and having an upstream end (16) that can be connected to a reservoir for retaining grey water to be filtered and a downstream end (17) equipped with nozzles (18) configured such as homogeneously to distribute the grey water over the upper surface of the highest cartridge (C₁).

5. Device according to one of the preceding claims, **characterized in that** the vessel (1) further incorporates, in the bottom part, a tank (19) for collecting filtered grey water, said tank (19) being in communication with a conduit (20) equipping the outlet (5) and connected to a pumping system for evacuating the filtered grey water.

6. Device according to one of the preceding claims, **characterized in that** the vessel (1) is further equipped with a grille arranged in the tank (19) and configured such as to retain suspended particles of between 300 microns and 500 microns.

7. On-site treatment installation for grey water from households with a view to the subsequent reuse thereof, of the type comprising, in succession and in the order of flow of the stream:
- a reservoir (30) for retaining said grey water,
- a biological treatment reactor (50) receiving said grey water from said retention reservoir (30) and ensuring aerobic degradation of the organic matter contained in said grey water,
- a membrane compartment (60) ensuring microfiltration of the treated water in said reactor (50), and
- a UV ray irradiation chamber (80) allowing disinfection of the microfiltered water originating from the membrane compartment (60),
said installation being **characterized in that** it further comprises a filtration device (40) according to one of Claims 1 to 6 for pre-filtering said grey water, said filtration device (40) receiving said grey water from said retention reservoir (30) on the one hand and providing said biological treatment reactor (50) with pre-filtered water on the other.
